# EUROPEAN PATENT SPECIFICATION

(11) **EP 4 352 704 B1**
(45) Date of publication and mention of the grant of the patent: **18.11.2026**
(21) Application number: 23777069.8
(22) Date of filing: 23.08.2023
(51) Int. Cl.: G06V 10/764, G06V 10/774, G06V 10/82

(54) **PERSONALIZED TEXT-TO-IMAGE DIFFUSION MODEL**
PERSONALISIERTES TEXT-ZU-BILD-DIFFUSIONSMODELL
MODÈLE DE DIFFUSION TEXTE À IMAGE PERSONNALISÉ

(30) Priority: 23.08.2022 US 202263400368 P
(43) Date of publication of application: 17.04.2024
(73) Proprietor: Google LLC, Mountain View, CA 94043 (US)
(72) Inventor: ABERMAN, Kfir, Mountian View California 94043 (US); RUIZ GUTIERREZ, Nataniel, Mountain View California 94043 (US); RUBINSTEIN, Michael, Mountain View California 94043 (US); LI, Yuanzhen, Mountain View California 94043 (US); PRITCH KNAAN, Yael, 6789141 Tel Aviv (IL); JAMPANI, Varun, Mountain View California 94043 (US)
(74) Representative: Hau, Darren Jun Wai
(86) International application number: PCT/US2023/030938
(87) International publication number: WO 2024/044258

(56) References cited:
- US-A1- 2021 141 861
- RINON GAL ET AL: "An Image is Worth One Word: Personalizing Text-to-Image Generation using Textual Inversion", ARXIV.ORG, CORNELL UNIVERSITY LIBRARY, 201 OLIN LIBRARY CORNELL UNIVERSITY ITHACA, NY 14853, 2 August 2022 (2022-08-02), XP091285859
- NATANIEL RUIZ ET AL: "DreamBooth: Fine Tuning Text-to-Image Diffusion Models for Subject-Driven Generation", ARXIV.ORG, CORNELL UNIVERSITY LIBRARY, 201 OLIN LIBRARY CORNELL UNIVERSITY ITHACA, NY 14853, 25 August 2022 (2022-08-25), XP091302565
- JAEMIN CHO ET AL: "DALL-Eval: Probing the Reasoning Skills and Social Biases of Text-to-Image Generative Transformers", ARXIV.ORG, CORNELL UNIVERSITY LIBRARY, 201 OLIN LIBRARY CORNELL UNIVERSITY ITHACA, NY 14853, 8 February 2022 (2022-02-08), XP091157223
- LU JUN-LI ET AL: "Customizable Text-to-Image Modeling by Contrastive Learning on Adjustable Word-Visual Pairs", 15 May 2022, 20220515, PAGE(S) 463 - 474, XP047622668
- WANG YIKUN ET AL: "Text2Sketch: Learning Face Sketch from Facial Attribute Text", 2018 25TH IEEE INTERNATIONAL CONFERENCE ON IMAGE PROCESSING (ICIP), IEEE, 7 October 2018 (2018-10-07), pages 669 - 673, XP033454809, DOI: 10.1109/ICIP.2018.8451236

## Description

### CROSS REFERENCE TO RELATED APPLICATIONS

This application is a non-provisional of and claims priority to U.S. Provisional Patent Application No. 63/400,368, filed on August 23, 2022.

### BACKGROUND

This specification relates to processing images using neural networks.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

Reference is made to RINON GAL ET AL: "An Image is Worth One Word: Personalizing Text-to-Image Generation using Textual Inversion",ARXIV.ORG, CORNELL UNIVERSITY LIBRARY, 201 OLIN LIBRARY CORNELL UNIVERSITY ITHACA, NY 14853, 2 August 2022.

### SUMMARY

The invention is set out in the appended set of claims.

This specification describes a system implemented as computer programs on one or more computers in one or more locations that trains a text-to-image model to generate an image conditioned on a text input. The text input can include natural language text that specifies the content, e.g., an object, that should appear in the image.

In particular, the system trains the conditional text-to-image model so that the model generates images that each depict a variable instance of an object class when the object class without a unique identifier is provided as part of the text input, and generates images that each depict a same subject instance of the object class when the unique identifier is provided as part of the text input. Thus, it is possible to retrieve a specific subject instance from the model.

According to an aspect, there is provided, a computer-implemented method comprising: generating a custom image dataset from a plurality of images that each depict a subject instance, wherein generating the custom image dataset comprises: for each of the plurality of the images, determining an object class of the subject instance that is depicted in the image; determining, from a vocabulary of tokens and in accordance with predetermined frequencies of the tokens, a sequence of one or more tokens for the subject instance depicted in the plurality of images; and generating, from the sequence of one or more tokens, a unique identifier for the subject instance depicted in the plurality of images; and training a text-to-image model on the custom image dataset to adjust parameter values of the text-to-image model so that the text-to-image model generates images that each depict a variable instance of the object class when the object class without the unique identifier is provided as a text input, and that generates images that each depict the subject instance of the object class when the unique identifier is provided as the text input.

The custom image dataset may be a labeled image dataset. Training the text-to-image model may be further based upon additional images depicting variable images of the object class.

The vocabulary of tokens may be associated with a trained text processing neural network configured to process the tokens in the vocabulary, and wherein the predetermined frequency of each token in the vocabulary is determined from a corresponding number of times that the token has been processed by the text processing neural network during training.

The method may further comprise determining the sequence of one or more tokens by using the vocabulary of tokens and in accordance with the predetermined frequencies of the tokens comprises selecting tokens with the lowest frequencies in the vocabulary.

Determining the sequence of one or more tokens may comprise selecting different tokens for different subject instances.

Generating the unique identifier may comprise processing the sequence of one or more tokens using a text de-tokenizer to generate a string of Unicode characters.

Determining the object class of the subject instance that is depicted in the image may comprise processing the image using an object detector machine learning model to generate an object detection output that specifies the object class.

Each of the plurality of images in the custom image dataset may be associated with a respective label that comprises the unique identifier and text defining the object class.

The text-to-image model may be a diffusion model that is configured to generate an image that shows a particular subject instance from noise conditioned on an input specifying a unique identifier for the particular subject instance that should appear in the image.

The diffusion model may comprise a cascade of a low-resolution diffusion model and a super-resolution diffusion model.

Training the text-to-image model on the custom image dataset may comprise: processing a first training model input by using an instance of the text-to-image model in accordance with pre-trained parameter values to generate a first training output image, wherein the first training model input comprises noise and a conditioning vector specifying an object class; processing a second training model input by using the text-to-image model in accordance with current parameter values of the text-to-image model to generate a second training output image, wherein the second training model input comprises noise and the conditioning vector specifying the object class; processing a third training model input by using the text-to-image model in accordance with the current parameter values of the text-to-image model to generate a third training output image, wherein the third training model input comprises noise and a conditioning vector specifying the object class and the unique identifier; and determining an update to the current parameter values of the text-to-image model from a gradient of an objective function that includes a class-specific prior preservation loss term that measures a difference between the first training output image and the second training output image. The objective function may also include a reconstruction loss term that measures a difference between the third training output image and one of the plurality of images included in the custom image dataset.

Training the text-to-image model on the custom or labeled image dataset may comprise processing a first training model input that comprises noise and an embedding vector specifying an object class using the text-to-image model to generate a first training output image; generating a noisy version of the first training output image from the first training output image; processing a second training model input that comprises the noisy version of first training output image and the embedding vector specifying the object class using the text-to-image model to generate a second training output image; and determining an update to the parameter values of the text-to-image model from a gradient of an objective function that includes a class-specific prior preservation loss term that measures a difference between the first training output image and the second training output image. The objective function may also include a reconstruction loss term that encourages the text-to-image model to process a third training model input comprising a noisy version of a third training input image to generate training model outputs from which a similar image to the third training input image can be generated.

Generating the first training output image may comprise sampling from a training model output generated by the text-to-image model from the first training model input.

Sampling from the training model output may comprise using an ancestral sampler.

Training the text-to-image model may comprise training the low-resolution diffusion model and the super-resolution diffusion model on different training model inputs.

According to another aspect, there is provided a system comprising one or more computers and one or more storage devices storing instructions that are operable, when executed by the one or more computers, to cause the one or more computers to perform the operations of the above method aspect.

According to further aspect, there is provided a computer storage medium encoded with instructions that, when executed by one or more computers, cause the one or more computers to perform the operations of the above method aspects.

It will be appreciated that features disclosed in the context of one aspect may be combined with features disclosed in the context of one or more other aspects.

Particular embodiments of the subject matter described in this specification can be implemented so as to realize one or more of the following advantages. By automatically generating unique identifiers for different subject instances belonging to one or more object classes that appear in the images, some techniques described in this specification increase the value of image data that is currently available or otherwise easily obtainable when applied to train a text-to-image model configured to generate images according to text instructions or prompts. Some techniques described in this specification train the text-to-image model by optimizing both a reconstruction loss and a prior preserving loss, which alleviates issues caused by language drift, to generate higher quality (e.g., higher fidelity) images than those produced by existing models, while additionally enabling the text-to-image model to generate these images with a diverse range of various contexts, poses, views, and/or lighting conditions.

The described techniques enable a variety of technological use cases that were previously not possible. For example, a text-to-image model trained using the described techniques can be used to perform a range of image processing tasks ranging from generating realistic recontextualized images according to user instructions, and producing artistic renditions of different objects or scenes, to customizing and/or accessorizing existing objects depicted in the images.

The generating to the unique identifier for the instance of the object class can be realized by a small training set, e.g., 3, 5, or 10 images, and thus the system can catalog a large library of unique instances while requiring relatively fewer processing resources than would be required to determine unique instances from a large data set that includes many different instances. Additionally, the use of rare tokens in the unique identifier reduces the likelihood of semantic entanglement. Thus, fewer tokens are required for the identifier, which results in a more compact storage requirement, and fewer processing cycles to generate the unique token than would be required were more frequent tokens used, as use of the latter would require a larger token space to reduce the likelihood of semantic entanglement.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1A is a diagram that illustrates an example architecture for fine-tuning a text-to-image model.
FIG. 1B is a diagram that illustrates an example architecture for performing inference using a fine-tuned text-to-image model.
FIG. 2 is a flowchart of an example process for fine-tuning a text-to-image model.
FIG. 3 is a flow diagram of an example process for determining an update based on an objective function that includes a class-specific prior preservation loss.
FIG. 4 is a diagram that illustrates an example process for fine-tuning a text-to-image model.

Like reference numbers and designations in the various drawings indicate like elements.

### DETAILED DESCRIPTION

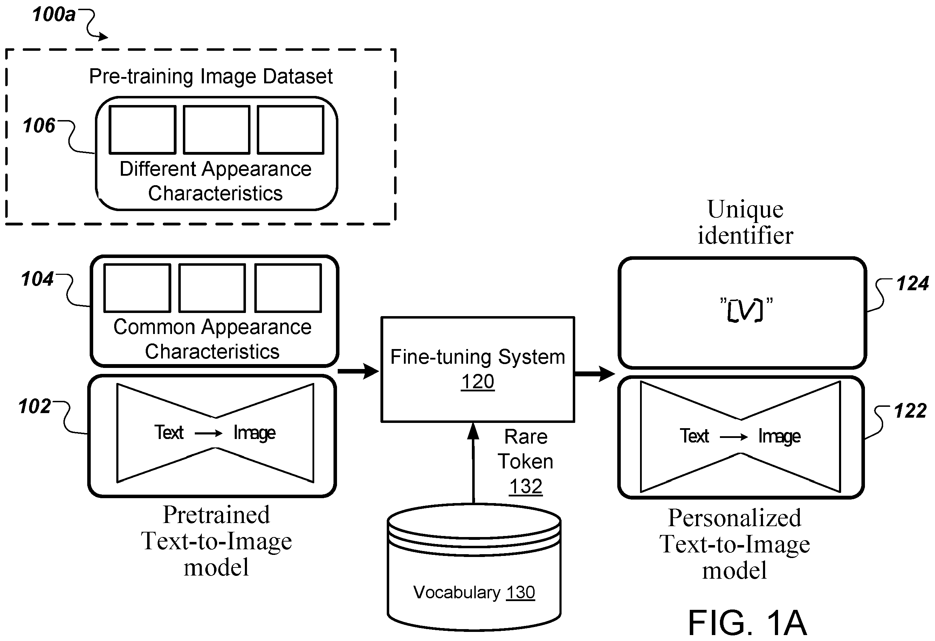

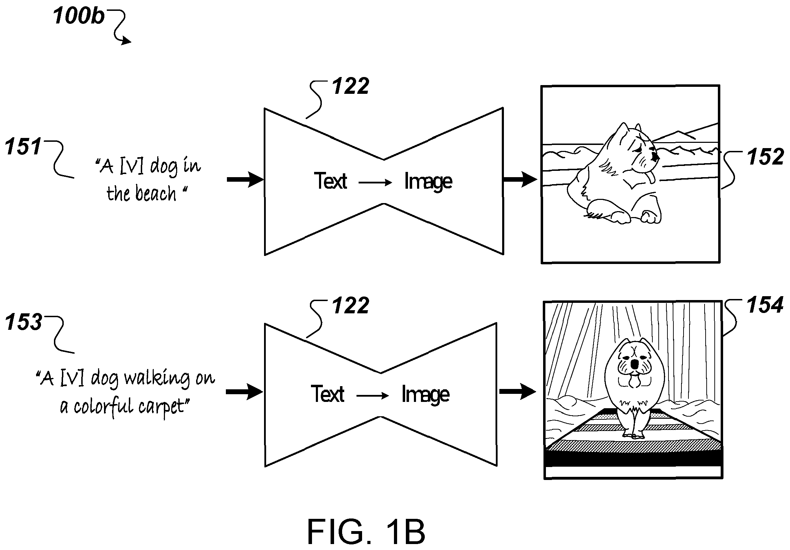

**FIGS.** 1A and 1B respectively illustrate example architectures for fine-tuning and performing inference using a text-to-image model. The examples in this specification generally discuss using a diffusion neural network architecture to implement the text-to-image model. However, the same techniques can also be applied to any other appropriate neural image-generation model, e.g., a model implemented using a generative adversarial network (GAN) architecture, a variational autoencoder (VAE) architecture, or an auto-regressive architecture.

FIG. 1A is a diagram that illustrates an example architecture 100a for fine-tuning a text-to-image model 102. The architecture 100a includes a fine-tuning system 120. The components of the fine-tuning system 120 can be implemented by a computing system comprising one or more computers that coordinate to fine-tune the text-to-image model 102.

Because the fine-tuning process need only utilize a relatively small number of images, this process may be referred to as "few-shot personalization." Therefore, while in some cases, the computing system can be a distributed computing system comprising a plurality of computers, in other cases, the computing system can include much less computationally expensive hardware, e.g., a desktop computer, laptop computer, or mobile computing device.

The text-to-image model 102 is a diffusion neural network that has parameters and that is configured to generate an output image by executing a reverse diffusion process over multiple time steps. At each time step, the text-to-image model 102 is configured to process a current intermediate (e.g., noisy) representation of the image in accordance with the values of the parameters to generate a noise output and use the noise output to update (e.g., de-noise) the current intermediate representation to generate an updated (e.g., de-noised) intermediate representation.

The noise output can, for example, include a noise estimate for each pixel in the intermediate representation of the image. For the very first time step, the intermediate representation that is provided as input to the text-to-image model 102 can be a randomly initialized noise input, for example, one that includes intensity values for the pixels in the image that are sampled from a noise distribution (e.g., a Gaussian distribution).

For example, the text-to-image model 102 generates a prediction of the output image using the current intermediate representation and the noise output. The text-to-image model 102 then updates the current intermediate representation by applying a diffusion sampler, e.g., a Denoising Diffusion Implicit Models (DDIM) sampler or a stochastic ancestral sampler, to sample from the prediction of the output image.

By way of illustration and not limitation, the text-to-image model 102 can be implemented using one of the example diffusion architectures described in Jonathan Ho, et al. Denoising Diffusion Probabilistic Models. arXiv:2006.11239, 2020, Chitwan Saharia, et al., Photorealistic text-to-image diffusion models with deep language understanding. arXiv preprint arXiv:2205.11487, 2022, and Robin Rombach, et al., High-resolution image synthesis with latent diffusion models, in Proceedings of the IEEE/CVF Conference on Computer Vision and Pattern Recognition, 2022, pp. 10 684-10 695, to name just a few examples.

The text-to-image model 102 is pre-trained, that is, the parameter values of the text-to-image model 102 have been adjusted to improve the performance of the model in generating images conditioned on text inputs. The pre-training involves applying an appropriate diffusion pre-training procedure to the images included in a pre-training image dataset 106. In some cases, the pre-training is locally performed at the fine-tuning system 120 while in other cases, the pre-training is performed on a remote, distributed computing system having multiple computers.

The fine-tuning system 120 obtains the custom image dataset 104 and fine-tunes the pre-trained text-to-image model 102 on the obtained custom image dataset 104. The custom image dataset 104 includes a plurality of images that each depict a same particular subject instance of an object class. On the other hand, the pre-training image dataset 106 includes a plurality of images that each depict a different subject instance of the same object class, or a different subject instance of a different object class.

The object class may be any of a variety of classes (or types or categories) of objects including landmarks, landscape or location features, vehicles, tools, food, clothing, devices, animals, human, to name just a few examples.

There might be multiple subject instances that belong to a common object class. For any object class, each subject instance belonging to the object class may have a set of appearance characteristics that visually distinguish it from other subject instances that also belong to the same object class. In other words, different subject instances might appear differently than each other, although they all belong to the same object class.

For example, different subject instances (different vehicles) of a "vehicles" object class have different shapes, sizes and/or colors, and a particular vehicle may have a particular shape, a particular size, and/or a particular color that visually distinguish it from other vehicles that belong to the same "vehicles" object class.

As another example, different subject instances (different human faces) of a "human faces" object class have different facial characteristics, and a particular vehicle may have a particular set of facial characteristics that visually distinguish it from other human faces that belong to the same "human faces" object class. In this example, the facial characteristics may include, but are not limited to, a general shape and size of the face, a position of facial features (e.g., eyes, nose, mouth, or ears), and/or a shape of the facial features.

As yet another example, different subject instances (different Golden Retriever dogs) of a "Golden Retriever dogs" object class have different skin/fur colors, ear shapes, and/or sizes, and a particular Golden Retriever dog may have a particular skin/fur color, a particular ear shape, and/or a particular size that visually distinguish it from other Golden Retriever dogs that belong to the same "Golden Retriever dogs" object class.

Therefore, the object instances depicted in the plurality of images included in the custom image dataset 104 may share a common set of appearance characteristics. On the other hand, the object instances depicted in the plurality of images included in the pre-training image dataset 106 may have different appearance characteristics than each other.

Generally the custom image dataset 104 has a smaller, and usually much smaller, size than the pre-training image dataset 106. In some cases, the custom image dataset 104 includes no more than 10 images, e.g., 3-5 images, that each depict the particular subject instance, while the pre-training image dataset 106 includes 100 million, 100 billion, or more images that depict different subject instances (that belong to the same or different object classes).

The fine-tuning system 120 can obtain the custom image dataset 104 in any of a variety of ways. For example, the system can receive the images as an upload from a remote user of the system over a data communication network, e.g., using an application programming interface (API) made available by the system. As another example, the system can receive an input from a user specifying which images that are already maintained by the system or another system that is accessible by the system should be used for fine-tuning the text-to-image model 102.

The custom image dataset 104 can include labeled images. A labeled image is an image for which known label information, which defines or otherwise identifies the object class of the object instance that appears in the image, is available to the fine-tuning system 120.

In some cases, the images are labeled at the time they are received, e.g., the fine-tuning system 120 also receives, from the user who provided the images, data defining the object class of instances that appear in the images, while in other cases, the images are unlabeled at the time they are received. An unlabeled image is an image for which label information about a known object class of the object instance that appears in the image is not readily available to the system. In those other cases, prior to using the received images to fine-tune the text-to-image mode 102, the fine-tuning system 120 first uses a trained machine learning model, e.g., an object detection or image classification machine learning model, to process the obtained images to determine the object class of the subject instances that appear in the images.

As a part of the fine-tuning process, the fine-tuning system 120 generates a unique identifier 124 for the particular subject instance that appears in each of the images included in the custom image dataset 104. To do this, fine-tuning system 120 performs a rare token lookup in a vocabulary 130. The vocabulary 130 can be the vocabulary used by any of a variety of text processing neural networks, or multi-modal neural networks (e.g., one that processes both text and image data), when processing text.

By way of illustration and not limitation, the text processing neural network can be a Transformer-based language model neural network, which auto-regressively generates an output sequence of tokens by, for each particular position within the output sequence, selecting a token from the vocabulary using a computed score distribution that assigns a respective score to each token in the vocabulary of tokens.

The vocabulary 130 can include any of a variety of tokens that represent text symbols or other symbols. For example, the vocabulary 130 can include one or more of characters, sub-words, words, punctuation marks, numbers, or other symbols that appear in a corpus of natural language text.

Each token in the vocabulary 130 may have a predetermined frequency that is determined from a corresponding number of times that the token has been processed, e.g., received as input or generated as output or both, by the text processing neural network during training, and/or after training, i.e., at inference. Put another way, the predetermined frequency of each token represents a level of usage of the token (e.g., relative to other tokens in the vocabulary 130) by the text processing neural network over some period of time; the lower the frequency, the higher the rarity of a corresponding token in the vocabulary 130.

To generate the unique identifier 124 for the particular subject instance depicted in the images included in the custom image dataset 104, the fine-tuning system 120 selects one or more tokens from the vocabulary 130 in accordance with the predetermined frequencies. In selecting the one or more tokens, the fine-tuning system 120 prioritizes the selection of tokens having relatively lower frequencies-or, higher rarities (in terms of usage)-relative to other tokens in the vocabulary 130. In some implementations, the fine-tuning system 120 selects tokens with the lowest frequencies in the vocabulary 130, referred to as "rare tokens" 132 in FIG. 1A, for the particular subject instance.

The fine-tuning system 120 applies a de-tokenizer to map the selected rare tokens 132 to a string of characters. The string of characters is then used as the unique identifier 124 for the particular subject instance. For example, the string of characters can be represented as Unicode characters, ASCII characters, or characters in another text encoding format; and the de-tokenizer can be one that is used by the text processing neural network when generating text output. In some implementation, the fine-tuning system 120 provides the unique identifier 124 to a user of the system, e.g., the user who uploaded the custom image dataset 104.

After obtaining the unique identifier 124 in this way, the fine-tuning system 120 proceeds to fine-tune the text-to-image model 102 to generate a personalized text-to-image model 122, i.e., to determine fine-tuned values of the parameter of the text-to-image model from their pre-trained values, by using the unique identifier 124 and the obtained custom image dataset 104.

During fine-tuning, the fine-tuning system 120 optimizes a reconstruction loss when a text input which includes the unique identifier 124 is provided as input to the text-to-image model 102; and optimizes a class-specific prior preservation loss when a text input which does not include the unique identifier 124 is provided as input to the text-to-image model 102.

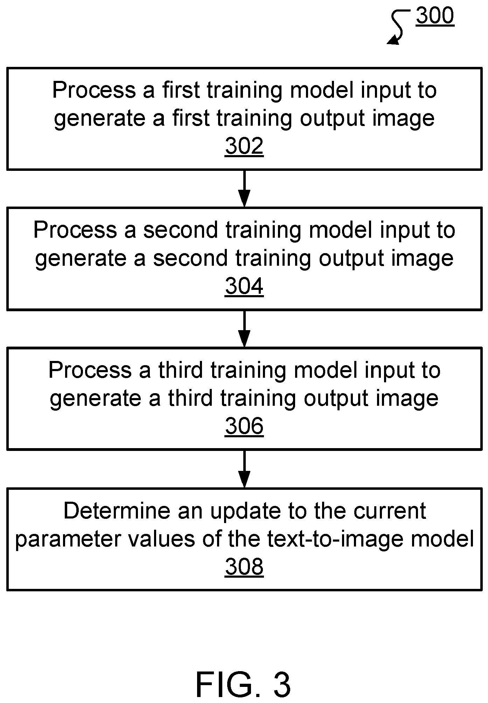

The fine-tuning process will be described in more details further below with reference to FIGS. 3-4, but in short, the personalized text-to-image model 122 generated as a result of the fine-tuning process learns a mapping from the unique identifier to images included in the custom image dataset 104, and, therefore, a mapping from the unique identifier 124 to the particular subject instance that appears in each of the images.

Once the training is complete, the fine-tuning system 120 can provide data specifying the personalized text-to-image model 122, i.e., data specifying the fine-tuned parameter values and, in some cases, the architecture of the text-to-image model, for deployment for performing the conditional image generation task, i.e., performing inference, on another system. Alternatively or in addition, the fine-tuning system 120 can deploy the personalized text-to-image model 122 and use the model to generate new images according to text prompts submitted by users.

FIG. 1B is a diagram that illustrates an example architecture 100b for performing inference using a fine-tuned text-to-image model. The architecture 100b includes a personalized text-to-image model 122 whose parameters have been adjusted according to the fine-tuning process. The personalized text-to-image model is a diffusion model that can generate new images that each show a particular subject instance from noise, conditioned on new input texts that each specify a unique identifier for the particular subject instance that should appear in the image.

Any of a variety of new text inputs may be received, e.g., from one or more remote users. For example, FIG. 1B illustrates two new text inputs 151, 153 that are each in the form of:
"a [V] [object class name] [context description]",
where the object class name is "dog"; the context description is "in the beach" in text input 151, and is "walking on a colorful carpet" in text input 153; and [V] represents the unique identifier that has been generated for the particular subject instance that appears in each of the images included in a custom image dataset, e.g., the custom image dataset 104 of FIG. 1A, that was used during the fine-tuning process.

Note that the text inputs need not actually include delimiters "[" and "]". Also note that in other examples, the new text inputs can take different forms. In principle, the new text inputs can include any prompt text in any language that describes the desired content, e.g., a desired object, that should appear in the images.

In particular, however, in the example of FIG. 1B and any other examples, each new text input includes the same unique identifier [V]. When the unique identifier [V] is included as a part of a new text input, by virtue of the mapping from the unique identifier to the particular subject instance that has been learned as a result of the fine-tuning process, the personalized text-to-image model 122 is capable of processing the new text input to generate new images 152, 154 that each depict the particular subject instance of the object class identified by the unique identifier.

FIG. 1B therefore illustrates that the personalized text-to-image model 122 generates two new images 152, 154 that both show a particular dog that have the same skin/fur color, the same ear shape, and the same size, but in different backgrounds. The two new images 152, 154 can then be provided as output, e.g., to the one or more remote users that gave the new text inputs.

On the other hand, assuming the unique identifier [V] was not included in the new text inputs, e.g., the new text inputs is in the form of
"a [object class name] [context description]",
where the object class name is "dog"; corresponding images generated by the personalized text-to-image model 122 will show variable dogs that have different skin/fur colors, different ear shapes, and different sizes, as well as in different backgrounds, e.g., dependent on the actual context description specified in the prompt text.

This model configuration enables a variety of technological use cases that were previously not possible. For example, an image synthesis system that implements the personalized text-to-image model 122 can receive, e.g., from a user, a text prompt that includes a unique identifier defining the subject instance of interest (e.g., a particular person, a particular animal, a particular car, a particular boat, etc.), and use the model to generate an arbitrary number of high-fidelity synthetic images (e.g., photorealistic images) that each show a subject instance of interest with a diverse range of various contexts, poses, views, and/or lighting conditions. Thus, the system may receive a text prompt that includes a unique identifier defining the subject instance of interest and in response, generates an image depicting the subject instance using the text-to-image model.

More succinctly, an input to the text-to-image model 122 is generated, and includes a unique identifier that is generated from a sequence of one or more tokens that each have a predetermined frequency within a vocabulary and that each are selected based on having low frequencies relative to other tokens in the vocabulary. This reduces semantic entanglement. Then, the text input is provided to the text-to-image model 122. Because the text-to-image model 122 has been trained on a plurality of images that depict subject instances of object classes, and each of the particular instances is associated with a particular unique identifier, the model 122 can generate images that depict a particular subject instance when the unique identifier is received as a part of a text input. The model 122 then generates one or more images using the trained text-to-image model based on the text input, and each of the one more images generated includes a depiction of the subject instance. The images are then provided as output.

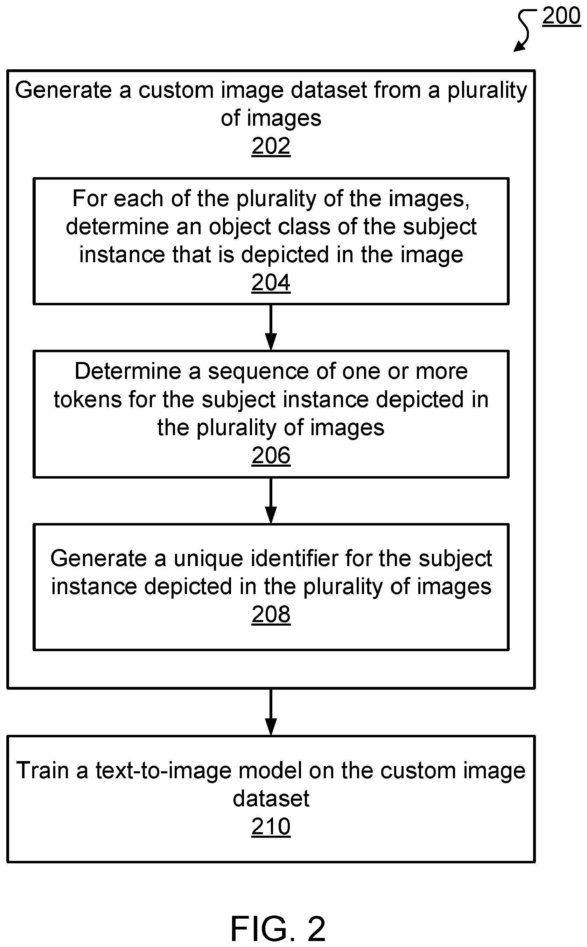

FIG. 2 is a flow diagram of an example process 200 for fine-tuning a text-to-image model for generating images depicting a particular subject instance of interest. For convenience, the process 200 will be described as being performed by a system of one or more computers located in one or more locations. For example, a training system, e.g., the fine-tuning system 120 depicted in FIG. 1A, appropriately programmed in accordance with this specification, can perform the process 200.

The system generates a custom image dataset from a plurality of images that each depict a same particular subject instance (step 202). For example, the plurality of images can be received by the system as an upload, e.g., from a remote user of the system, or from another source that is accessible by the system. As discussed above, depicting the same particular subject instance means that, the plurality of images included in the custom image dataset each depict a subject instance that share a common set of appearance characteristics as the subject instances depicted in other images included in the custom image dataset.

In general, the system generates the custom image dataset by associating each of the plurality of images with (i) a respective label that includes a unique identifier, which identifies the particular subject instance that appears in the image, and (ii) text that defines the object class to which the particular subject instance belongs. Generating the custom image dataset can involve perform the followings steps 204-208.

The system determines, for each of the plurality of the images, an object class of the particular subject instance that is depicted in the image (step 204). In some cases, the images are labeled at the time they are received; thus, the system can determine the object class based on the received label information. In some other cases, the images are unlabeled at the time they are received; thus, the system can use a trained machine learning model, e.g., an object detection or image classification machine learning model, to process each received image to generate an object detection output that specifies the object class of the particular subject instance that appears in the received image.

The system determines, from a vocabulary of tokens and in accordance with the predetermined frequencies of the tokens included in the vocabulary, a sequence of one or more tokens for the particular subject instance depicted in the plurality of images (step 206). Typically, the system selects different tokens for different subject instances.

For each subject instance, in selecting each of the one or more tokens in the corresponding sequence, the system prioritizes the selection of tokens having relatively lower frequencies-or, higher rarities in terms of usage-relative to other tokens in the vocabulary. In some implementations, the system can select tokens with the lowest frequencies in the vocabulary for a particular subject instance. For example, the system can select, as a first token in the sequence, a rare token that has the lowest frequency from the vocabulary of tokens, and then select, as a second token in the sequence, another rare token that has the second lowest frequency from the vocabulary of tokens, and so on.

The system processes the sequence of one or more tokens using a text de-tokenizer to generate the unique identifier (step 208). The unique identifier, which identifies the particular subject instance depicted in the plurality of images, can be represented as a string of characters in a given text encoding format, e.g., a Unicode format, an ASCII format, or another text encoding format.

The system trains a text-to-image model on the custom image dataset to adjust parameter values of the text-to-image model (step 210). In particular, the system trains the text-to-image model so that the text-to-image model generates images that each depict a variable instance of the object class when the object class without the unique identifier is provided as a text input, and that generates images that each depict the particular subject instance of the object class when the unique identifier is provided as the text input. Step 210 is described in more detail below.

FIG. 3 is a flow diagram of an example process 300 for determining an update based on an objective function that includes a class-specific prior preservation loss. For convenience, the process 300 will be described as being performed by a system of one or more computers located in one or more locations. For example, a training system, e.g., the fine-tuning system 120 depicted in FIG. 1A, appropriately programmed in accordance with this specification, can perform the process 300.

The system can repeatedly perform multiple iterations of process 300 to determine the fine-tuned values of the parameters of the text-to-image model from their pre-trained values. In general, the system can repeatedly perform the process 300 until a termination criterion is reached, e.g., after the process 300 have been performed a predetermined number of times.

The system processes a first training model input that includes (i) a first noise and (ii) a conditioning vector generated from text that specifies an object class, using a frozen instance of the text-to-image model that has pre-trained parameter values (that have been determined as a result of the pre-training) to generate a first training output image (step 302).

The noise can, for example, be a noise sampled from a noise distribution (e.g., a Gaussian distribution, such as *N*(0, *I*), where *I* is an identity matrix. The conditioning vector *c* = Γ(*P*) can be generated by using a text encoder neural network Γ from processing a text input *P.* The text input *P* includes text that specifies an object class and, in particular, that does not include the unique identifier.

The system processes a second training model input that includes (i) a second noise and (ii) the conditioning vector generated from text that specifies the object class, using the text-to-image model in accordance with current parameter values (that have been adjusted as a result of performing previous iterations of the process 300) to generate a second training output image (step 304). Like the conditioning vector used in step 302, the conditioning vector is generated from text that does not include the unique identifier.

The system processes a third training model input that includes (i) a third noise and (ii) a conditioning vector generated from text that specifies the object class and that includes the unique identifier, using the text-to-image model in accordance with the current parameter values (that have been adjusted as a result of performing previous iterations of the process 300) to generate a third training output image (step 306).

In other words, unlike the conditioning vectors used in steps 302 and 304, here the conditioning vector *c* = Γ(*P*) can be generated by using a text encoder neural network Γ from processing a text input P which includes both (i) text that specifies an object class and (ii) a unique identifier which identifies the particular subject instance depicted in the plurality of images included in the custom image dataset.

The system determines an update to the current parameter values of the text-to-image model from a gradient of an objective function (step 308). Specifically, the system computes the gradient with respect to the parameters of the text-to-image model and applies an optimizer to the gradients to generate a gradient-based update to the current parameter values of the text-to-image model.

The objective function includes both a reconstruction loss term and a class-specific prior preservation loss term. The reconstruction loss term trains the text-to-image model to generate training output images that are similar to those images included in the custom image dataset. To that end, the reconstruction loss term can measure a difference between the third training output image and one of the plurality of images included in the custom image dataset. For example, the difference can be computed as a squared distance between the third training output image and an image selected from the custom image dataset: $\left[{w}_{t}{\left‖{\hat{x}}_{θ}\left({α}_{t}x+{σ}_{t}ϵ,c\right)-x\right‖}_{2}^{2}\right. ,$ where *θ* represents the parameters of the text-to-image model, *x* is an image selected from the custom image dataset, *ε* ~ *N(0, I*) is the initial noise input, *c* is a conditioning vector (that is generated from text including the unique identifier), and *αₜ, σₜ, ωₜ* are terms that control the noise schedule and sample quality, and are functions of the diffusion process time *t* ~ *U*([0, 1]).

On the other hand, the class-specific prior preservation loss term trains the text-to-image model to generate training output images similar to the training output images that are generated by the frozen instance of the text-to-image model. Unlike the images included in the custom image dataset which all depict the same particular subject instance of an object class, these training output images could each depict a different subject instance (that belongs to the same or different object classes).

The frozen instance of the text-to-image model has pre-trained parameter values that are held fixed after the pre-training, and, hence, are at least partially different from the current parameter values of the text-to-image model, which have been adjusted during the fine-tuning process. The class-specific prior preservation loss term can measure a difference, e.g., that is computed as a squared distance, between the first training output image and the second training output image. $\left.{w}_{t ′}{\left‖{\hat{x}}_{θ}\left({α}_{t},{x}_{pr}+{σ}_{t},ϵ′,{c}_{pr}\right)-{x}_{pr}\right‖}_{2}^{2}\right] ,$ where *θ* represents the parameters of the text-to-image model, *xₚᵣ* = *x̂*(*z*_{*t*1}, *cₚᵣ*) is an image generated by using the ancestral sampler on the frozen instance of the pre-trained text-to-image model, *ε' ~ N*(0, *I*) is the initial noise input, *cₚᵣ* is a conditioning vector (that is generated from text without the unique identifier), and *α_{t'}, σ_{t'}, ωₜ*, are terms that control the noise schedule and sample quality, and are functions of the diffusion process time *t* ~ *U*([0, 1]).

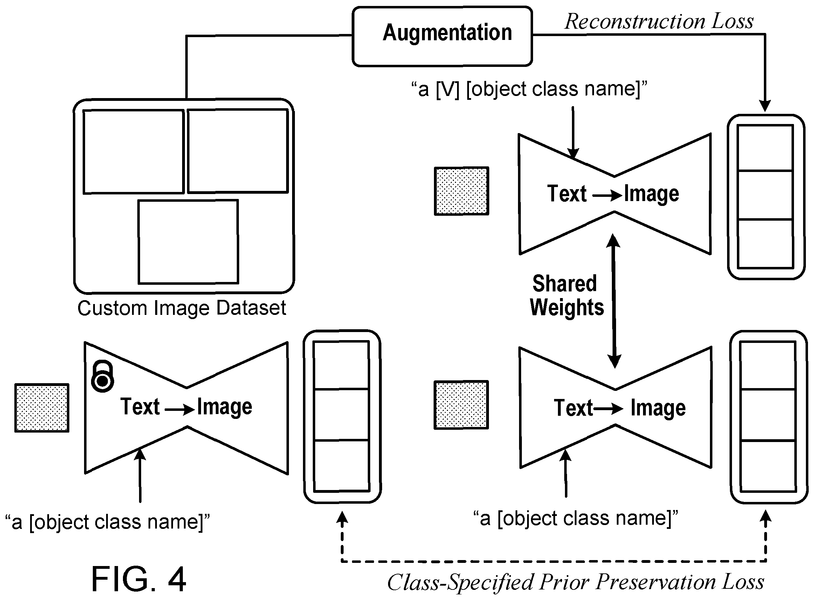

FIG. 4 is a diagram 400 that illustrates an example process for fine-tuning a text-to-image model. As illustrated, the fine-tuning process of the text-to-image model makes use of both a reconstruction loss term and a class-specific prior preservation loss term. The system computes the reconstruction loss term with respect to images selected from the custom image dataset. Those images each depict a same particular subject instance. To compute the class-specific prior preservation loss term, the system additionally makes use of a frozen instance of the text-to-image model has pre-trained parameter values that are held fixed.

During training, the system can incorporate any number of techniques to improve the speed, the effectiveness, or both of the fine-tuning process. For example, some implementations of the text-to-image model can include a sequence (or "cascade") of a low-resolution diffusion model and a super-resolution diffusion model. By making use of a sequence of diffusion models that can each be conditioned on the text input, the system can iteratively up-scale the resolution of the image, ensuring that a high-resolution image can be generated without requiring a single model to generate the image at the desired output resolution directly. In these implementations, the system can train the low-resolution diffusion model and the super-resolution diffusion model on different training model inputs.

As another example, the system can make use of a noise conditioning augmentation technique, which involves corrupting the intermediate representations using noise with specific strength, and then conditioning (the super-resolution diffusion model of) the text-to-image model on the level of corruption. Noise conditioning augmentation is described in more details in Jonathan Ho, et al. Cascaded diffusion models for high fidelity image generation. J. Mach. Learn. Res., 23:47-1, 2022.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a JAX framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
generating (202) a custom image dataset from a plurality of images that each depict a subject instance, wherein generating the custom image dataset comprises:
for each of the plurality of the images, determining (204) an object class of the subject instance that is depicted in the image;
determining (206), from a vocabulary of tokens and in accordance with predetermined frequencies of token usage in the vocabulary, a sequence of one or more tokens for the subject instance depicted in the plurality of images, wherein selection of tokens having lower frequencies relative to other tokens in the vocabulary is prioritized; and
generating (208), from the sequence of one or more tokens, a unique identifier for the subject instance depicted in the plurality of images;
associating each of the plurality of images in the custom image dataset with a respective label that comprises the corresponding unique identifier and text defining the object class; and
training (210) a text-to-image model on the custom image dataset to adjust parameter values of the text-to-image model so that the text-to-image model generates images that each depict the subject instance of the object class when the unique identifier is provided as a text input;
wherein the training is based upon an objective function comprising:
a reconstruction loss term to train the text-to-image model to generate training output images that are similar to those included in the custom image dataset when the text-to-image model is conditioned based upon text including the unique identifier and the object class; and
a class-specific prior preservation loss term to train the text-to-image model to generate training output images similar to the training output images that are generated by a frozen instance of the text-to-image model having pre-trained parameter values when conditioned based upon text that includes the object class but does not include the unique identifier.

2. The method of claim 1, wherein the vocabulary of tokens is associated with a trained text processing neural network configured to process the tokens in the vocabulary, and wherein the predetermined frequency token usage in the vocabulary is determined from a corresponding number of times that the token has been processed by the text processing neural network during training.

3. The method of any one of claims 1-2, wherein determining (206) the sequence of one or more tokens by using the vocabulary of tokens and in accordance with the predetermined frequencies of token usage comprises selecting tokens with the lowest frequencies in the vocabulary.

4. The method of any one of claims 1-3, wherein determining (206) the sequence of one or more tokens comprises selecting different tokens for different subject instances.

5. The method of any one of claims 1-4 wherein generating (208) the unique identifier comprises processing the sequence of one or more tokens using a text de-tokenizer to generate a string of Unicode characters.

6. The method of any one of claims 1-5, wherein determining (204) the object class of the subject instance that is depicted in the image comprises processing the image using an object detector machine learning model to generate an object detection output that specifies the object class.

7. The method of any one of claims 1-6, wherein the text-to-image model is a diffusion model that is configured to generate an image that shows a particular subject instance from noise conditioned on an input specifying a unique identifier for the particular subject instance that should appear in the image.

8. The method of claim 7, wherein the diffusion model comprises a cascade of a low-resolution diffusion model and a super-resolution diffusion model.

9. The method of any one of claims 1-8, wherein training the text-to-image model on the custom image dataset comprises:
processing (302) a first training model input by using an instance of the text-to-image model in accordance with pre-trained parameter values to generate a first training output image, wherein the first training model input comprises noise and a conditioning vector specifying an object class;
processing (304) a second training model input by using the text-to-image model in accordance with current parameter values of the text-to-image model to generate a second training output image, wherein the second training model input comprises noise and the conditioning vector specifying the object class;
processing (306) a third training model input by using the text-to-image model in accordance with the current parameter values of the text-to-image model to generate a third training output image, wherein the third training model input comprises noise and a conditioning vector specifying the object class and the unique identifier; and
determining (308) an update to the current parameter values of the text-to-image model from a gradient of the objective function and wherein the class-specific prior preservation loss term measures a difference between the first training output image and the second training output image; and optionally
wherein generating (302) the first training output image comprises sampling from a training model output generated by the text-to-image model from the first training model input.

10. The method of claim 9, wherein sampling from the training model output comprises using an ancestral sampler.

11. The method of claim 9 or 10, wherein the reconstruction loss term measures a difference between the third training output image and one of the plurality of images included in the custom image dataset.

12. The method of any one of claims 9-11 when also dependent on claim 8, wherein training (210) the text-to-image model comprises training the low-resolution diffusion model and the super-resolution diffusion model on different training model inputs.

13. A computer-implemented method comprising:
generating, as input to a text-to-image model, a text input that includes a unique identifier that is generated from a sequence of one or more tokens that each have a predetermined frequency of usage within a vocabulary and that each are selected based on having a low frequency relative to other tokens in the vocabulary;
providing the text input to the text-to-image model, wherein the text-to-image model has been trained according to any preceding claim on a plurality of images that depict subject instances of object classes, wherein each of the particular instances is associated with a particular unique identifier, to generate images that depict a particular subject instance when the unique identifier is received as a part of a text input;
generating one or more images using the trained text-to-image model based on the text input, wherein each of the one or more images generated includes a depiction of the subject instance; and
outputting the one or more images.

14. A system comprising one or more computers and one or more storage devices storing instructions that are operable, when executed by the one or more computers, to cause the one or more computers to perform the operations of the respective method of any preceding claim.

15. A computer storage medium encoded with instructions that, when executed by one or more computers, cause the one or more computers to perform the operations of the respective method of any preceding claim.

## Patentansprüche

1. Computerimplementiertes Verfahren, umfassend:
Erzeugen (202) eines benutzerdefinierten Bilddatensatzes aus einer Mehrzahl von Bildern, die jeweils eine Subjektinstanz darstellen, wobei Erzeugen des benutzerdefinierten Bilddatensatzes umfasst:
für jedes der Mehrzahl von Bildern, Bestimmen (204) einer Objektklasse der Subjektinstanz, die in dem Bild dargestellt ist;
Bestimmen (206), aus einem Vokabular von Token und in Übereinstimmung mit vorbestimmten Häufigkeiten der Tokenverwendung in dem Vokabular, einer Sequenz von einem oder mehreren Token für die in der Mehrzahl von Bildern dargestellte Subjektinstanz, wobei die Auswahl von Token, die niedrigere Häufigkeiten relativ zu anderen Token in dem Vokabular aufweisen, priorisiert wird; und
Erzeugen (208), aus der Sequenz von einem oder mehreren Token, einer eindeutigen Kennung für die in der Mehrzahl von Bildern dargestellte Subjektinstanz;
Zuordnen jedes der Mehrzahl von Bildern in dem benutzerdefinierten Bilddatensatz zu einem jeweiligen Label, das die entsprechende eindeutige Kennung und Text, der die Objektklasse definiert, umfasst; und
Trainieren (210) eines Text-zu-Bild-Modells auf dem benutzerdefinierten Bilddatensatz, um Parameterwerte des Text-zu-Bild-Modells anzupassen, so dass das Text-zu-Bild-Modell Bilder erzeugt, die jeweils die Subjektinstanz der Objektklasse darstellen, wenn die eindeutige Kennung als eine Texteingabe bereitgestellt wird;
wobei Trainieren auf einer Zielfunktion basiert, die Folgendes umfasst:
einen Rekonstruktionsverlustterm, um das Text-zu-Bild-Modell zu trainieren, Trainingsausgabebilder zu erzeugen, die denen ähnlich sind, die in dem benutzerdefinierten Bilddatensatz beinhaltet sind, wenn das Text-zu-Bild-Modell basierend auf Text konditioniert ist, der die eindeutige Kennung und die Objektklasse beinhaltet; und
einen klassenspezifischen Prior-Preservation-Verlustterm, um das Text-zu-Bild-Modell zu trainieren, Trainingsausgabebilder zu erzeugen, die den Trainingsausgabebildern ähnlich sind, die von einer eingefrorenen Instanz des Text-zu-Bild-Modells, die vortrainierte Parameterwerte aufweist, erzeugt werden, wenn sie basierend auf Text konditioniert ist, der die Objektklasse beinhaltet, aber die eindeutige Kennung nicht beinhaltet.

2. Verfahren nach Anspruch 1, wobei das Vokabular von Token einem trainierten textverarbeitenden neuronalen Netzwerk zugeordnet ist, das konfiguriert ist, die Token in dem Vokabular zu verarbeiten, und wobei die vorbestimmte Häufigkeit der Tokenverwendung in dem Vokabular aus einer entsprechenden Anzahl von Malen bestimmt wird, die der Token von dem textverarbeitenden neuronalen Netzwerk während des Trainierens verarbeitet worden ist.

3. Verfahren nach einem der Ansprüche 1-2, wobei Bestimmen (206) der Sequenz von einem oder mehreren Token durch Verwenden des Vokabulars von Token und in Übereinstimmung mit den vorbestimmten Häufigkeiten von Tokenverwendung Auswählen von Token mit den niedrigsten Häufigkeiten in dem Vokabular umfasst.

4. Verfahren nach einem der Ansprüche 1-3, wobei Bestimmen (206) der Sequenz von einem oder mehreren Token Auswählen verschiedener Token für verschiedene Subjektinstanzen umfasst.

5. Verfahren nach einem der Ansprüche 1-4, wobei Erzeugen (208) der eindeutigen Kennung Verarbeiten der Sequenz von einem oder mehreren Token unter Verwendung eines Text-De-Tokenizers umfasst, um eine Zeichenkette von Unicode-Zeichen zu erzeugen.

6. Verfahren nach einem der Ansprüche 1-5, wobei Bestimmen (204) der Objektklasse der Subjektinstanz, die in dem Bild dargestellt ist, Verarbeiten des Bildes unter Verwendung eines Objektdetektor-Maschinenlernmodells umfasst, um eine Objektdetektionsausgabe zu erzeugen, die die Objektklasse definiert.

7. Verfahren nach einem der Ansprüche 1-6, wobei das Text-zu-Bild-Modell ein Diffusionsmodell ist, das konfiguriert ist, ein Bild, das eine bestimmte Subjektinstanz zeigt, aus Rauschen zu erzeugen, das auf eine Eingabe konditioniert ist, die eine eindeutige Kennung für die bestimmte Subjektinstanz definiert, die in dem Bild erscheinen soll.

8. Verfahren nach Anspruch 7, wobei das Diffusionsmodell eine Kaskade eines niedrigauflösenden Diffusionsmodells und eines superauflösenden Diffusionsmodells umfasst.

9. Verfahren nach einem der Ansprüche 1-8, wobei Trainieren des Text-zu-Bild-Modells auf dem benutzerdefinierten Bilddatensatz umfasst:
Verarbeiten (302) einer ersten Trainingsmodelleingabe durch Verwenden einer Instanz des Text-zu-Bild-Modells in Übereinstimmung mit vortrainierten Parameterwerten, um ein erstes Trainingsausgabebild zu erzeugen, wobei die erste Trainingsmodelleingabe Rauschen und einen Konditionierungsvektor, der eine Objektklasse definiert, umfasst;
Verarbeiten (304) einer zweiten Trainingsmodelleingabe durch Verwenden des Text-zu-Bild-Modells in Übereinstimmung mit aktuellen Parameterwerten des Text-zu-Bild-Modells, um ein zweites Trainingsausgabebild zu erzeugen, wobei die zweite Trainingsmodelleingabe Rauschen und den Konditionierungsvektor, der die Objektklasse definiert, umfasst;
Verarbeiten (306) einer dritten Trainingsmodelleingabe durch Verwenden des Text-zu-Bild-Modells in Übereinstimmung mit den aktuellen Parameterwerten des Text-zu-Bild-Modells, um ein drittes Trainingsausgabebild zu erzeugen, wobei die dritte Trainingsmodelleingabe Rauschen und einen Konditionierungsvektor, der die Objektklasse und die eindeutige Kennung definiert, umfasst; und
Bestimmen (308) einer Aktualisierung der aktuellen Parameterwerte des Text-zu-Bild-Modells aus einem Gradienten der Zielfunktion, und wobei der klassenspezifische Prior-Preservation-Verlustterm eine Differenz zwischen dem ersten Trainingsausgabebild und dem zweiten Trainingsausgabebild misst; und optional
wobei Erzeugen (302) des ersten Trainingsausgabebildes Sampling aus einer Trainingsmodellausgabe umfasst, die von dem Text-zu-Bild-Modell aus der ersten Trainingsmodelleingabe erzeugt wird.

10. Verfahren nach Anspruch 9, wobei Sampling aus der Trainingsmodellausgabe Verwenden eines Ancestral-Samplers umfasst.

11. Verfahren nach Anspruch 9 oder 10, wobei der Rekonstruktionsverlustterm eine Differenz zwischen dem dritten Trainingsausgabebild und einem der Mehrzahl von Bildern misst, die in dem benutzerdefinierten Bilddatensatz beinhaltet sind.

12. Verfahren nach einem der Ansprüche 9-11, sofern auch von Anspruch 8 abhängig, wobei Trainieren (210) des Text-zu-Bild-Modells Trainieren des niedrigauflösenden Diffusionsmodells und des superauflösenden Diffusionsmodells auf verschiedenen Trainingsmodelleingaben umfasst.

13. Computerimplementiertes Verfahren, umfassend:
Erzeugen, als Eingabe für ein Text-zu-Bild-Modell, einer Texteingabe, die eine eindeutige Kennung beinhaltet, die aus einer Sequenz von einem oder mehreren Token erzeugt ist, die jeweils eine vorbestimmte Häufigkeit der Verwendung innerhalb eines Vokabulars aufweisen und die jeweils basierend darauf ausgewählt sind, dass sie eine niedrige Häufigkeit relativ zu anderen Token in dem Vokabular aufweisen;
Bereitstellen der Texteingabe an das Text-zu-Bild-Modell, wobei das Text-zu-Bild-Modell gemäß einem der vorhergehenden Ansprüche auf einer Mehrzahl von Bildern trainiert worden ist, die Subjektinstanzen von Objektklassen darstellen, wobei jede der bestimmten Instanzen einer bestimmten eindeutigen Kennung zugeordnet ist, um Bilder zu erzeugen, die eine bestimmte Subjektinstanz darstellen, wenn die eindeutige Kennung als ein Teil einer Texteingabe empfangen wird;
Erzeugen eines oder mehrerer Bilder unter Verwendung des trainierten Text-zu-Bild-Modells basierend auf der Texteingabe, wobei jedes des einen oder der mehreren erzeugten Bilder eine Darstellung der Subjektinstanz beinhaltet; und
Ausgeben des einen oder der mehreren Bilder.

14. System, umfassend einen oder mehrere Computer und eine oder mehrere Speichervorrichtungen, die Anweisungen speichern, die betreibbar sind, wenn sie von dem einen oder den mehreren Computern ausgeführt werden, den einen oder die mehreren Computer zu veranlassen, die Operationen des jeweiligen Verfahrens nach einem der vorhergehenden Ansprüche durchzuführen.

15. Computerspeichermedium, codiert mit Anweisungen, die, wenn sie von einem oder mehreren Computern ausgeführt werden, den einen oder die mehreren Computer veranlassen, die Operationen des jeweiligen Verfahrens nach einem der vorhergehenden Ansprüche durchzuführen.

## Revendications

1. Procédé mis en œuvre par ordinateur comprenant :
la génération (202) d'un ensemble de données d'images personnalisé à partir d'une pluralité d'images qui représentent chacune une instance de sujet, dans lequel la génération de l'ensemble de données d'images personnalisé comprend :
pour chacune de la pluralité des images, la détermination (204) d'une classe d'objet de l'instance de sujet qui est représentée dans l'image ;
la détermination (206), à partir d'un vocabulaire de jetons et conformément aux fréquences prédéterminées d'utilisation de jetons dans le vocabulaire, d'une séquence d'un ou de plusieurs jetons pour l'instance de sujet représentée dans la pluralité d'images, dans lequel la sélection de jetons ayant des fréquences plus faibles par rapport aux autres jetons dans le vocabulaire est privilégiée ; et
la génération (208), à partir de la séquence d'un ou de plusieurs jetons, d'un identifiant unique pour l'instance de sujet représentée dans la pluralité d'images ;
l'association de chacune de la pluralité d'images dans l'ensemble de données d'images personnalisé à une étiquette respective qui comprend l'identifiant unique correspondant et un texte définissant la classe d'objet ; et
l'entraînement (210) d'un modèle texte-image sur l'ensemble de données d'images personnalisé pour régler des valeurs de paramètres du modèle texte-image de sorte que le modèle texte-image génère des images qui représentent chacune l'instance de sujet de la classe d'objet lorsque l'identifiant unique est fourni comme entrée de texte ;
dans lequel l'entraînement est basé sur une fonction objectif comprenant :
un terme de perte de reconstruction pour entraîner le modèle texte-image à générer des images de sortie d'entraînement qui sont similaires à celles incluses dans l'ensemble de données d'images personnalisé lorsque le modèle texte-image est conditionné sur la base d'un texte comportant l'identifiant unique et la classe d'objet ; et
un terme de perte de préservation a priori spécifique à la classe pour entraîner le modèle texte-image à générer des images de sortie d'entraînement similaires aux images de sortie d'entraînement qui sont générées par une instance figée du modèle texte-image ayant des valeurs de paramètres pré-entraînées lorsqu'il est conditionné sur la base d'un texte qui comporte la classe d'objet mais ne comporte pas l'identifiant unique.

2. Procédé selon la revendication 1, dans lequel le vocabulaire de jetons est associé à un réseau neuronal de traitement de texte entraîné configuré pour traiter les jetons du vocabulaire, et dans lequel la fréquence prédéterminée d'utilisation de jetons dans le vocabulaire est déterminée à partir d'un nombre correspondant de fois où le jeton a été traité par le réseau neuronal de traitement de texte pendant l'entraînement.

3. Procédé selon l'une quelconque des revendications 1 et 2, dans lequel la détermination (206) de la séquence d'un ou de plusieurs jetons à l'aide du vocabulaire de jetons et conformément aux fréquences prédéterminées d'utilisation de jetons comprend la sélection de jetons ayant les fréquences les plus faibles dans le vocabulaire.

4. Procédé selon l'une quelconque des revendications 1 à 3, dans lequel la détermination (206) de la séquence d'un ou de plusieurs jetons comprend la sélection de jetons différents pour différentes instances de sujet.

5. Procédé selon l'une quelconque des revendications 1 à 4, dans lequel la génération (208) de l'identifiant unique comprend le traitement de la séquence d'un ou de plusieurs jetons à l'aide d'un détokeniseur de texte pour générer une chaîne de caractères Unicode.

6. Procédé selon l'une quelconque des revendications 1 à 5, dans lequel la détermination (204) de la classe d'objet de l'instance de sujet qui est représentée dans l'image comprend le traitement de l'image à l'aide d'un modèle d'apprentissage automatique de détection d'objets pour générer une sortie de détection d'objets qui spécifie la classe d'objet.

7. Procédé selon l'une quelconque des revendications 1 à 6, dans lequel le modèle texte-image est un modèle de diffusion qui est configuré pour générer une image qui montre une instance de sujet particulière à partir d'un bruit conditionné par une entrée spécifiant un identifiant unique pour l'instance de sujet particulière qui doit apparaître dans l'image.

8. Procédé selon la revendication 7, dans lequel le modèle de diffusion comprend une cascade d'un modèle de diffusion à basse résolution et d'un modèle de diffusion à super-résolution.

9. Procédé selon l'une quelconque des revendications 1 à 8, dans lequel l'entraînement du modèle texte-image sur l'ensemble de données d'images personnalisé comprend :
le traitement (302) d'une première entrée de modèle d'entraînement à l'aide d'une instance du modèle texte-image conformément aux valeurs de paramètres pré-entraînées pour générer une première image de sortie d'entraînement, dans lequel la première entrée de modèle d'entraînement comprend du bruit et un vecteur de conditionnement spécifiant une classe d'objet ;
le traitement (304) d'une deuxième entrée de modèle d'entraînement à l'aide du modèle texte-image conformément aux valeurs de paramètres actuelles du modèle texte-image pour générer une deuxième image de sortie d'entraînement, dans lequel la deuxième entrée de modèle d'entraînement comprend du bruit et le vecteur de conditionnement spécifiant la classe d'objet ;
le traitement (306) d'une troisième entrée de modèle d'entraînement à l'aide du modèle texte-image conformément aux valeurs de paramètres actuelles du modèle texte-image pour générer une troisième image de sortie d'entraînement, dans lequel la troisième entrée de modèle d'entraînement comprend du bruit et un vecteur de conditionnement spécifiant la classe d'objet et l'identifiant unique ; et
la détermination (308) d'une mise à jour des valeurs de paramètres actuelles du modèle texte-image à partir d'un gradient de la fonction objectif, et dans lequel le terme de perte de préservation a priori spécifique à la classe mesure une différence entre la première image de sortie d'entraînement et la deuxième image de sortie d'entraînement ; et éventuellement dans lequel la génération (302) de la première image de sortie d'entraînement comprend l'échantillonnage à partir d'une sortie de modèle d'entraînement générée par le modèle texte-image à partir de la première entrée de modèle d'entraînement.

10. Procédé selon la revendication 9, dans lequel l'échantillonnage à partir de la sortie de modèle d'entraînement comprend l'utilisation d'un échantillonneur ancestral.

11. Procédé selon la revendication 9 ou 10, dans lequel le terme de perte de reconstruction mesure une différence entre la troisième image de sortie d'entraînement et l'une de la pluralité d'images incluses dans l'ensemble de données d'images personnalisé.

12. Procédé selon l'une quelconque des revendications 9 à 11, lorsqu'elles dépendent également de la revendication 8, dans lequel l'entraînement (210) du modèle texte-image comprend l'entraînement du modèle de diffusion à basse résolution et du modèle de diffusion à super-résolution sur différentes entrées de modèle d'entraînement.

13. Procédé mis en œuvre par ordinateur comprenant :
la génération, en entrée d'un modèle texte-image, d'une entrée de texte qui comporte un identifiant unique qui est généré à partir d'une séquence d'un ou de plusieurs jetons qui ont chacun une fréquence d'utilisation prédéterminée dans un vocabulaire et qui sont chacun sélectionnés sur la base d'une faible fréquence par rapport aux autres jetons du vocabulaire ;
la fourniture de l'entrée de texte au modèle texte-image, dans lequel le modèle texte-image a été entraîné selon une quelconque revendication précédente sur une pluralité d'images qui représentent des instances de sujet de classes d'objet, dans lequel chacune des instances particulières est associée à un identifiant unique particulier, afin de générer des images qui représentent une instance de sujet particulière lorsque l'identifiant unique est reçu en tant que partie d'une entrée de texte ;
la génération d'une ou de plusieurs images à l'aide du modèle texte-image entraîné sur la base de l'entrée de texte, dans lequel chacune des une ou plusieurs images générées comporte une représentation de l'instance de sujet ; et
la sortie des une ou plusieurs images.

14. Système comprenant un ou plusieurs ordinateurs et un ou plusieurs dispositifs de stockage stockant des instructions qui sont opérationnelles pour, lorsqu'elles sont exécutées par les un ou plusieurs ordinateurs, amener les un ou plusieurs ordinateurs à réaliser les opérations du procédé respectif selon une quelconque revendication précédente.

15. Support de stockage informatique codé avec des instructions qui, lorsqu'elles sont exécutées par un ou plusieurs ordinateurs, amènent les un ou plusieurs ordinateurs à réaliser les opérations du procédé respectif selon une quelconque revendication précédente.
